(19) Europäisches Patentamt
European Patent Office
Office européen des brevets

(11) Veröffentlichungsnummer: **0 636 665 A1**

# (12) EUROPÄISCHE PATENTANMELDUNG

(21) Anmeldenummer: **94111576.8**

(51) Int. Cl.[6]: **C09B 62/085**

(22) Anmeldetag: **25.07.94**

(30) Priorität: **31.07.93 DE 4325784**

(43) Veröffentlichungstag der Anmeldung: **01.02.95 Patentblatt 95/05**

(84) Benannte Vertragsstaaten: **CH DE FR GB IT LI**

(71) Anmelder: **HOECHST AKTIENGESELLSCHAFT**
**Brüningstrasse 50**
**D-65929 Frankfurt am Main (DE)**

(72) Erfinder: **Reiher, Uwe, Dr.**
**Sachsenring 8**
**D-65719 Hofheim am Taunus (DE)**
Erfinder: **Russ, Werner Hubert, Dr.**
**Wingertstrasse 8a**
**D-65439 Flörsheim/Main (DE)**

## (54) Wasserlösliche Azoverbindungen, Verfahren zu ihrer Herstellung und ihre Verwendung als Farbstoffe.

(57) Es werden neue Monoazofarbstoffe der nachstehend angegebenen und definierten allgemeinen Fornmel (1) beschrieben, die faserreaktive Eigenschaften besitzen und als Farbstoffe zum Färben von hydroxy-und/oder carbonamidgruppenhaltigem Material, insbesondere Fasermaterial, wie Wolle und synthetisches Polyamid und insbesondere Cellulosefasermaterialien, wie Baumwolle, dienen.

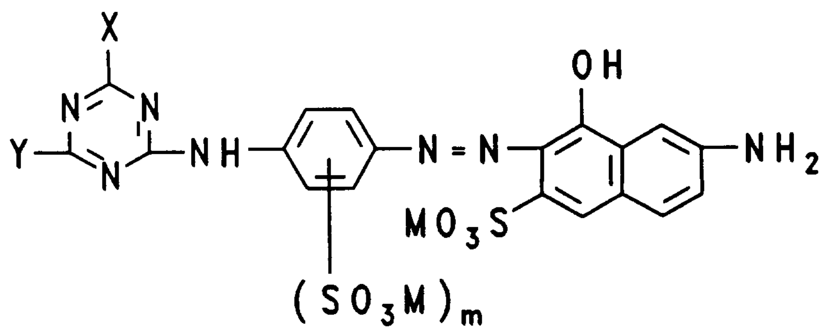

(1)

worin bedeuten: M ist Wasserstoff oder ein Alkalimetall, m ist die Zahl 1 oder 2, X ist Fluor, Chlor oder Alkoxy, das durch eine oder zwei Heterogruppen unterbrochen sein kann, oder ist Cycloalkyloxy, Benzyloxy, Sulfoalkoxy, Amino, Alkylamino, Cycloalkylamino oder Alkylamino, dessen Alkyl durch Heterogruppen unterbrochen ist, oder ist Benzylamino, Sulfoalkylamino oder Cyanoamino, Y ist Fluor, Chlor oder eine Gruppe der Formel $R^o$-NH-, worin $R^o$ eine Gruppe der allgemeinen Formel (4a), (4b) oder (4c)

$Z - SO_2 - alk -$ (4a)

EP 0 636 665 A1

Rank Xerox (UK) Business Services
(3.10/3.09/3.3.4)

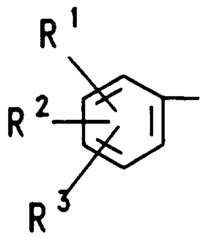

(4b)

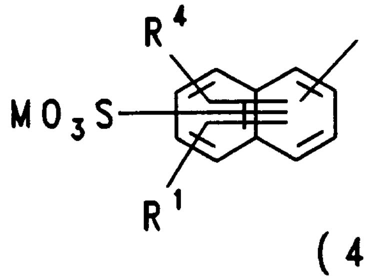

(4c)

ist, in welchen M die obengenannte Bedeutung besitzt, die Gruppe Z-$SO_2$- eine faserreaktive Gruppe der Vinylsulfonreihe ist, alk Alkylen von 2 bis 4 C-Atomen ist, $R^1$ Wasserstoff, Carboxy, Sulfo oder eine faserreaktive Gruppe der Vinylsulfonreihe ist, $R^2$ Wasserstoff, niederes Alkyl, niederes Alkoxy, Chlor, Brom, Carboxy, Sulfo oder Nitro ist, $R^3$ Wasserstoff, niederes Alkyl, niederes Alkoxy, Chlor oder Brom ist und $R^4$ Wasserstoff, Sulfo oder Carboxy ist, oder Y ist eine Gruppe der allgemeinen Formel (3b) oder (3c)

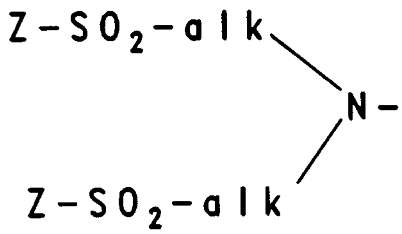

(3b)

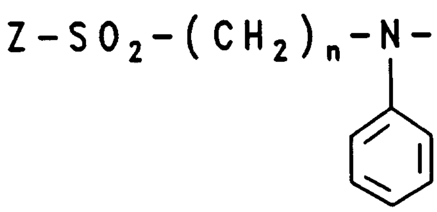

(3c)

in welchen Z-$SO_2$- und alk die obengenannten Bedeutungen besitzen und n für eine Zahl von 1 bis 4 steht.

Die Erfindung liegt auf dem technischen Gebiet der faserreaktiven Farbstoffe.

Aus der Praxis des Färbens mit faserreaktiven Farbstoffen ergeben sich erhöhte Anforderungen an die Qualität der Färbungen und an die Wirtschaftlichkeit der Färbeprozesse. Infolge dessen bestand weiterhin Bedarf nach neuen faserreaktiven Farbstoffen, die verbesserte Eigenschaften besitzen. Insbesondere für die Herstellung von Färbungen mit roter Nuance sind Reaktivfarbstoffe gefragt, die solche Färbungen mit hohen Echtheiten liefern. Zwar sind aus der britischen Patentschrift Nr. 836 248, der US-Patentschrift Nr. 2 979 498 und der Europäischen Patentanmeldungs-Veröffentlichung Nr. 0 070 806 zahlreiche rote faserreaktive Farbstoffe bekannt, jedoch sind die Echtheitseigenschaften, speziell die Lichtechtheit sowie die Schweißlichtechtheit, der mit diesen Farbstoffen erhältlichen Färbungen verbesserungswürdig.

Es wurden nunmehr neue Azoverbindungen mit diesbezüglich verbesserten Eigenschaften gefunden, die der allgemeinen Formel (1)

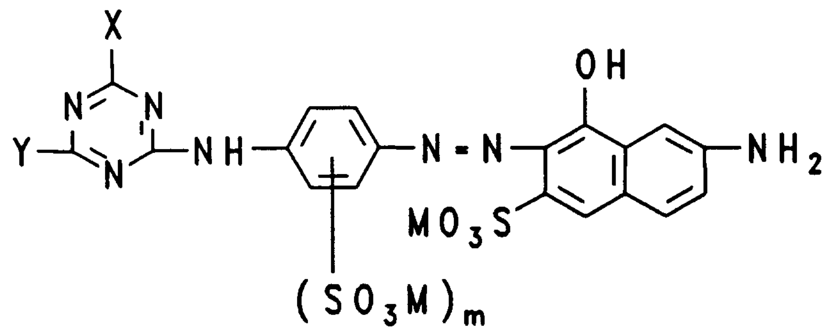

(1)

entsprechen, in welcher bedeuten:

M ist Wasserstoff oder ein Alkalimetall, wie Natrium, Kalium oder Lithium;

m ist die Zahl 1 oder 2;

X ist Fluor, Chlor oder eine Gruppe der allgemeinen Formel (2a) oder (2b)

$R^A$ - O - (2a) $R^B$ - NH - (2b)

in welchen

$R^A$ Alkyl von 1 bis 10 C-Atomen, bevorzugt von 1 bis 4 C-Atomen, wie Methyl und Ethyl, oder Cycloalkyl von 5 bis 8 C-Atomen, wie Cyclohexyl, das noch durch 1 oder 2 Methylgruppen substituiert sein kann, ist oder Alkyl von 2 bis 8 C-Atomen bedeutet, das durch eine oder zwei Heterogruppen unterbrochen ist, wie beispielsweise durch Heterogruppen, die aus der Gruppe -O- , -NH- , -NH-CO- , -CO-NH- , -CO- , $-SO_2-$ , $-NH-SO_2-$ und $-SO_2-NH-$ ausgewählt sind, oder Benzyl oder Sulfoalkyl von 1 bis 4 C-Atomen, wie Sulfomethyl und $\beta$-Sulfoethyl ist, bevorzugt $\beta$-Sulfoethyl ist, und

$R^B$ Wasserstoff, Alkyl von 1 bis 10 C-Atomen, bevorzugt von 1 bis 4 C-Atomen, wie Methyl und Ethyl, oder Cycloalkyl von 5 bis 8 C-Atomen, wie Cyclohexyl, das noch durch 1 oder 2 Methylgruppen substituiert sein kann, ist oder Alkyl von 2 bis 8 C-Atomen bedeutet, das durch eine oder zwei Heterogruppen unterbrochen ist, wie beispielsweise durch Heterogruppen, die aus der Gruppe -O-, -NH-, -NH-CO-, -CO-NH-, -CO-, $-SO_2-$, $-NH-SO_2-$ und $-SO_2-NH-$ ausgewählt sind, oder Benzyl, Sulfoalkyl von 1 bis 4 C-Atomen, wie Sulfomethyl und $\beta$-Sulfoethyl, oder Cyano ist, bevorzugt Cyano bedeutet;

Y ist Fluor, Chlor oder eine Gruppe der allgemeinen Formel (3a)

$R^o$ - NH - (3a)

in welcher

$R^o$ eine Gruppe der allgemeinen Formel (4a), (4b) oder (4c)

Z - $SO_2$ - alk - (4a)

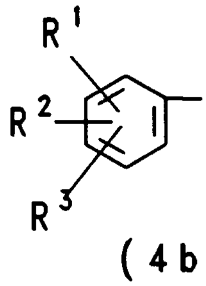

(4b)

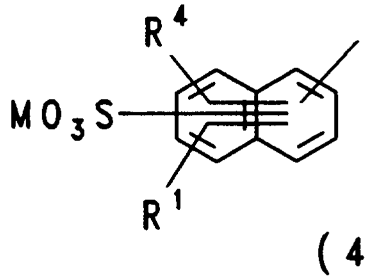

(4c)

ist, in welchen

M die obengenannte Bedeutung besitzt,

Z für Vinyl steht oder Ethyl ist, das in β-Stellung durch einen Substituenten substituiert ist, der durch Alkali unter Bildung der Vinylgruppe eliminierbar ist,

alk Alkylen von 2 bis 4 C-Atomen ist,

$R^1$ Wasserstoff, Carboxy, Sulfo oder bevorzugt eine Gruppe der allgemeinen Formel $-SO_2-Z$ ist, worin Z die obengenannte Bedeutung besitzt,

$R^2$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor, Brom, Carboxy, Sulfo oder Nitro ist, bevorzugt Wasserstoff, Alkyl von 1 bis 4 C-Atomen, Alkoxy von 1 bis 4 C-Atomen oder Sulfo ist,

$R^3$ Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Chlor oder Brom ist, bevorzugt Wasserstoff oder Alkoxy von 1 bis 4 C-Atomen ist, und

$R^4$ Wasserstoff, Sulfo oder Carboxy, bevorzugt Wasserstoff oder Sulfo, ist, oder

Y ist eine Gruppe der allgemeinen Formel (3b)

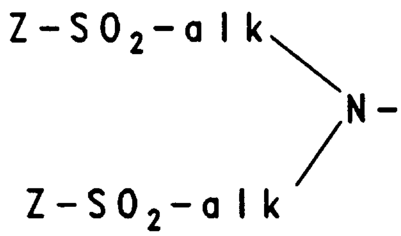

(3b)

in welcher Z und alk die obengenannte Bedeutung haben, oder

Y ist eine Gruppe der allgemeinen Formel (3c)

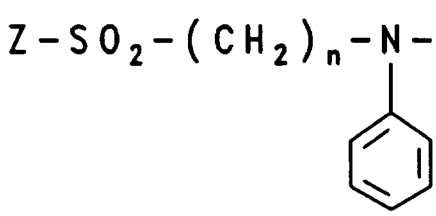

(3c)

in welcher

n für die Zahl 1 bis 4, bevorzugt 2 oder 3, steht und

Z Vinyl ist oder Ethyl ist, das in β-Stellung durch einen Substituenten substituiert ist, der durch Alkali unter Bildung der Vinylgruppe eliminiert wird.

Bevorzugt ist X Fluor, Chlor oder Cyanoamino, und bevorzugt ist Y eine Gruppe der allgemeinen Formel (3a) mit $R^o$ gleich einer Gruppe der allgemeinen Formel (4a) oder (4b) oder eine Gruppe der

allgemeinen Formel (3b) oder (3c), in welchen alk 1,2-Ethylen oder 1,3-Propylen bedeutet, $R^1$ Wasserstoff oder bevorzugt β-Sulfatoethylsulfonyl oder Vinylsulfonyl ist, $R^2$ Wasserstoff, Methyl, Methoxy oder Ethoxy ist, $R^3$ Wasserstoff, Methoxy oder Ethoxy ist, Z Vinyl oder β-Sulfatoethyl bedeutet und n für die Zahl 2 oder 3 steht. In Formel (4c) steht die freie Bindung bevorzugt in β-Stellung an den Naphthalinring gebunden.

Alkalisch eliminierbare Substituenten, die in β-Stellung der Ethylgruppe von Z stehen, sind beispielsweise Halogenatome, wie Brom und Chlor, Estergruppen organischer Carbon- und Sulfonsäuren, wie von Alkylcarbonsäuren, gegebenenfalls substituierter Benzolcarbonsäuren und gegebenenfalls substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino. Bevorzugt ist Z in Formeln (4b) und (4c) β-Sulfatoethyl oder Vinyl und insbesondere bevorzugt β-Sulfatoethyl, und bevorzugt ist Z in Formeln (4a) und (3c) β-Sulfatoethyl, β-Chlorethyl oder Vinyl, insbesondere bevorzugt β-Chlorethyl und Vinyl.

In den obengenannten allgemeinen Formeln und ebenso in den nachfolgenden allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Gruppen "Sulfo", "Carboxy", "Thiosulfato", "Phosphato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM, Thiosulfatogruppen Gruppen entsprechend der allgemeinen Formel $-S-SO_3M$ , Phosphatogruppen Gruppen entsprechend der allgemeinen Formel $-OPO_3M_2$ und Sulfatogruppen Gruppen entsprechend der allgemeinen Formel $-OSO_3M$ , in welchen M die obengenannte Bedeutung besitzt.

Reste X sind beispielsweise Methoxy, Ethoxy, Propoxy, Ethoxymethoxy, β-Ethoxyethoxy, β-Aminoethoxy, Benzyloxy, Sulfomethoxy, Sulfoethoxy, Methylamino, Ethylamino, Propylamino, Cyclohexylamino, β-(Ethylamino)ethylamino, β-Ethoxyethylamino, Benzylamino, β-Sulfoethylamino und insbesondere Cyanoamino, Fluor und Chlor.

Gruppen der allgemeinen Formel (4a), (4b) und (4c) im Rest Y sind beispielsweise
2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-3-(sulfatoethylsulfonyl)-phenyl, 2-Chlor-4-(β-sulfatoethylsulfonyl)-phenyl, 2-Brom-4-(β-sulfatoethylsulfonyl)-phenyl, 4-Methoxy-3-(β-sulfatoethylsulfonyl)-phenyl, 4-Chlor-3-(β-sulfatoethylsulfonyl)-phenyl, 2-Ethoxy-4- oder -5-(β-sulfatoethylsulfonyl)-phenyl, 2-Methyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2-Sulfo-4-vinylsulfonyl-phenyl, 2-Hydroxy-4- oder -5-(β-sulfatoethylsulfonyl)-phenyl, 2-Chlor-4- oder -5-(β-chlorethylsulfonyl)-phenyl, 2-Hydroxy-5-(β-sulfatoethylsulfonyl)-phenyl, 2-Hydroxy-3-sulfo-5-(β-sulfatoethylsulfonyl)-phenyl, 3- oder 4-(β-Acetoxyethylsulfonyl)-phenyl, 6-Carboxy-1-sulfo-naphth-2-yl, 5-(β-Sulfatoethylsulfonyl)-naphth-2-yl, 6- oder 7- oder 8-(β-Sulfatoethylsulfonyl)-naphth-2-yl, 6-(β-Sulfatoethylsulfonyl)-1-sulfo-naphth-2-yl, 5-(β-Sulfatoethylsulfonyl)-1-sulfo-naphth-2-yl, 8-(β-Sulfatoethylsulfonyl)-6-sulfo-naphth-2-yl, β-Vinylsulfonyl-ethylamino, β-(β'-Chlorethylsulfonyl)-ethylamino, β-(β'-Sulfatoethylsulfonyl)-ethylamino, γ-(β'-Chlorethylsulfonyl)-propylamino, γ-(β'-Sulfatoethylsulfonyl)-propylamino und γ-(Vinylsulfonyl)-propylamino.

Die vorliegende Erfindung betrifft weiterhin ein Verfahren zur Herstellung der erfindungsgemäßen Monoazoverbindungen der allgemeinen Formel (1), das dadurch gekennzeichnet ist, daß man eine Verbindung der allgemeinen Formel (5)

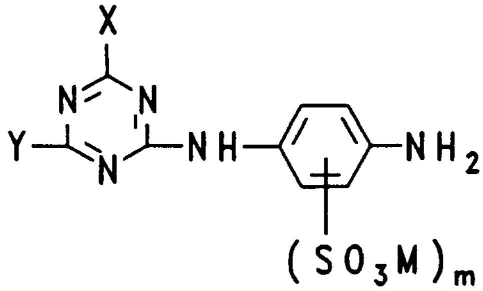

(5)

in welcher X, Y, M und m die obengenannten Bedeutungen haben, diazotiert und mit einer Verbindung der allgemeinen Formel (6)

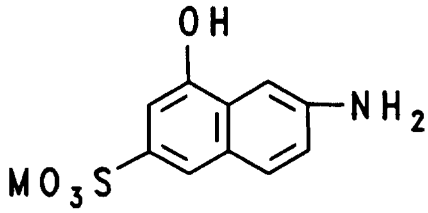

(6)

in welcher M die obengenannte Bedeutung besitzt, kuppelt.

Die Diazotierungs- und Kupplungsreaktionen erfolgen analog bekannten Verfahrensweisen, so die Diazotierung in der Regel bei einer Temperatur zwischen -5 °C und + 15 °C und bei einem pH-Wert von unterhalb 2 mittels einer starken Säuren und Alkalinitrit in bevorzugt wäßrigem Medium und die Kupplungsreaktion in der Regel bei einer Temperatur zwischen 0 und 50 °C und bei einem pH-Wert zwischen 3 und 7, bevorzugt zwischen 4 und 6,5, in bevorzugt wäßrigem Medium.

Die Herstellung der Ausgangsverbindungen der allgemeinen Formel (5) erfolgt analog bekannten Verfahrensweisen der Umsetzung einer aromatischen Aminoverbindung mit einem halogensubstituierten Triazin. So kann die Synthese einer Ausgangsverbindung der allgemeinen Formel (5) durch Umsetzung einer Phenylendiamin-Verbindung der allgemeinen Formel (7)

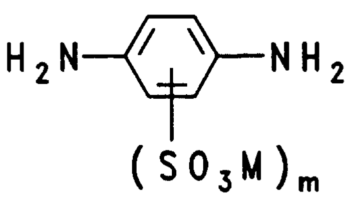

(7)

mit M und m der obengenannten Bedeutung mit einer Verbindung der allgemeinen Formel (8)

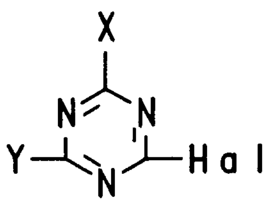

(8)

in welcher X und Y eine der obengenannten Bedeutungen besitzt und Hal Chlor oder Fluor bedeutet, im wäßrigen oder wäßrig-organischen Medium in Suspension oder Lösung erfolgen. Führt man die Umsetzung in einem wäßrigorganischen Medium durch, so ist das organische Medium beispielsweise Aceton, Dimethylformamid, Dimethylsulfoxid oder N-Methyl-pyrrolidon. Vorteilhaft wird der bei der Kondensation freiwerdende Halogenwasserstoff laufend durch Zugabe wäßriger Alkalihydroxide, -carbonate oder -bicarbonate neutralisiert. Die Kondensationsreaktion des Halogen-s-triazins der allgemeinen Formel (8) erfolgt in der Regel bei einer Temperatur zwischen -5 °C und + 90 °C, im Falle von X gleich Fluor oder Chlor und Y gleich einer Gruppe der allgemeinen Formel (3a), (3b) oder (3c) bevorzugt bei einer Temperatur zwischen -5 °C und + 25 °C, und bei einem pH-Wert zwischen 6 und 8. Ist in Formel (8) X gleich eine Gruppe der allgemeinen Formel (2a) oder (2b) und Y gleich einer Gruppe der allgemeinen Formel (3a), (3b) oder (3c), so führt man die Umsetzung in der Regel bei einem pH-Wert zwischen 1 und 5 und bei einer Temperatur zwischen 50 und 90 °C durch.

Alternativ lassen sich die Ausgangsverbindungen der allgemeinen Formel (5) mit Y gleich einer Gruppe der allgemeinen Formel (3a), (3b) oder (3c) und X gleich Chlor auch dadurch herstellen, daß man eine Verbindung der allgemeinen Formel (7) mit Cyanurchlorid umsetzt und das erhaltene Produkt anschließend mit einem Amin der allgemeinen Formel Y-H mit Y einer Gruppe der allgemeinen Formel (3a), (3b) oder (3c) kondensiert. Die Umsetzung mit Cyanurchlorid erfolgt in der Regel bei einer Temperatur zwischen -5 °C und + 30 °C, bevorzugt zwischen 0 und 20 °C, und bei einem pH-Wert zwischen 7 und 9. Die anschließende Kondensationsreaktion mit der Aminoverbindung entsprechend der allgemeinen Formel Y-H wird in der Regel bei einer Temperatur zwischen 0 und 20 °C und bei einem pH-Wert zwischen 0 und 5 durchgeführt.

Die Ausgangsverbindungen entsprechend den allgemeinen Formeln (6) und (7) sowie den allgemeinen Formeln (5) und (8) sind allgemein beschrieben und lassen sich gemäß dem Stand der Technik analog bekannten Verfahrensweisen herstellen. Einige der Ausgangsverbindungen entsprechend den allgemeinen Formeln (5) und (8), in welchen Y für einen Rest der allgemeinen Formel (3c) mit n gleich 3 oder 4 steht, und ebenso deren N-Phenyl-Aminokomponenten entsprechend der allgemeinen Formel (9)

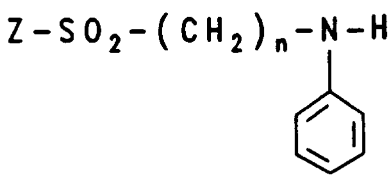

(9)

mit n gleich 3 oder 4 sind per se nicht beschrieben. Diese Aminoverbindungen lassen sich beispielsweise in der Weise herstellen, daß man N-Allyl-N-acetylanilin (s. J. Org. Chem. 14, 1099 (1949)) analog der in der deutschen Offenlegungsschrift Nr. 41 06 106 beschriebenen Verfahrensweise mit 2-Mercapto-ethanol in Gegenwart eines Radikalinitiators umsetzt, die erhaltene N-[γ-(β'-Hydroxyethylthio)-propyl]-N-acetyl-anilin-Verbindungzur Sulfonylverbindung oxidiert, beispielsweise mittels Wasserstoffperoxid in Gegenwart einer katalytischen Menge einer Übergangsmetallverbindung, wie beispielsweise Wolframoxid. Aus der so erhaltenen Sulfonylverbindung wird die Acetylgruppe im alkalischen oder sauren Bereich, vorzugsweise in salzsaurer wäßriger Lösung, wie beispielsweise in 5 bis 30 %iger wäßriger Salzsäure, bei einer Temperatur zwischen 80 und 100 °C hydrolytisch abgespalten. Das so erhaltene N-Phenyl-N-[γ-(β'-hydroxyethylsulfonyl)-propyl]-amin kann aus der neutral gestellten wäßrigen Syntheselösung von der wäßrigen Phase abgetrennt werden. Dessen β-Hydroxyethylsulfonyl-Gruppe läßt sich nach üblichen Methoden verestern, so beispielsweise mittels konzentrierter Schwefelsäure bei einer Temperatur zwischen 10 und 30 °C in die β-Sulfatoethylsulfonyl-Verbindung überführen.

Die Umsetzung dieses Amins der allgemeinen Formel (9) zur Verbindung der allgemeinen Formel (8) kann analog bekannten Verfahrensweisen der Umsetzung von Aminoverbindungen mit einer Dihalogeno-triazin-Verbindung oder einem Cyanurhalogenid erfolgen.

Die Abscheidung der erfindungsgemäß hergestellten Verbindungen der allgemeinen Formel (1) - im nachfolgenden Verbindungen (1) genannt - aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugeführt werden kann.

Die Verbindungen (1) haben faserreaktive Eigenschaften und besitzen sehr gute Farbstoffeigenschaften. Sie können deshalb zum Färben von hydroxy- und/oder carbonamidgruppenhaltigem Material, insbesondere Fasermaterial, wie auch von Leder, verwendet werden. Insbesondere ist ihre Verwendung in Kombinationsfärbungen, wie der Trichromiefärbung, interessant. Auch können sie in Form der bei der Synthese anfallenden Lösungen, gegebenenfalls nach Zusatz einer Puffersubstanz und gegebenenfalls nach Konzentrierung, direkt als Flüssigpräparation der färberischen Verwendung zugeführt werden.

Gegenstand der vorliegenden Erfindung ist deshalb auch die Verwendung der Verbindungen (1) zum Färben von hydroxy- und carbonamidgruppenahltigen Materialien bzw. Verfahren zum Färben solcher Materialien, bei welchem man die Verbindung (1) auf das Material aufbringt oder in das Material einbringt und sie auf oder in dem Material mittels Wärme oder mit Hilfe eines alkalisch wirkenden Mittels oder Mittels beider Maßnahmen fixiert. Eingeschlossen sind hierbei die Massefärbung, beispielsweise Folien aus Polyamid, und die Druckfärbung. Bevorzugt kommen die Materialien in Form von Fasermaterialien zur Anwendung, insbesondere in Form von Textilfasern, wie in Form von Geweben und Garnen, beispielsweise in Form von Strängen und Wickelkörpern.

Hydroxygruppenhaltige Materialien sind natürliche oder synthetische hydroxygruppenahltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und viskose Kunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Verbindungen (1) lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten Farbausbeuten sowie ausgezeichnetem Farbaufbau bei hohen Fixiergraden. Man färbt bei Temperaturen zwischen 40 und 105°C, gegebenenfalls bei Temperaturen bis zu 120°C unter Druck, und gegebenenfalls in Gegenwart von üblichen Färbereihilfsmitteln im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Verbindungen (1) beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten mit hohen Fixiergraden und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls erhält man nach den üblichen Druckverfahren für Cellulosefasern, die entweder einphasig durchgeführt werden können, beispielsweise durch Bedrucken mit einer Natriumcarbonat oder ein anderes säurebindendes Mittel und die Verbindung (1) enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektkrolythaltiges alkalisches Bad oder durch Überklotzen mit einer alkalischen elektkrolythaltigen Klotzflotte mit anschließendem Verweilen dieses behandelten Materials oder anschließendem Dämpfen oder anschließender Behandlung mit Trockenhitze, durchgeführt werden können, farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den Verbindungen (1) erhaltenen Fixiergrade sehr hoch.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Verbindungen (1) auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalilmetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der Verbindungen (1) mit den säurebindenden Mitteln, gegebenenfalls unter Wärmeeinwirkung, werden diese chemisch an die Cellulosefaser gebunden; insbesondere die Cellulosefärbungen zeigen nach der üblichen Nachbehandlung durch Spülen zur Entfernung von nicht fixierten Anteilen der Verbindungen (1) ausgezeichnete Naßechtheiten, zumal sich solche nicht fixierten Anteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammonmiumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifachen molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40 °C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden.

Die mit den Verbindungen (1) hergestellten Färbungen und Drucke zeichnen sich durch klare Nuancen aus. Insbesondere die Färbungen und Drucke auf Cellulosefasermaterialien besitzen, wie bereits erwähnt, darüber hinaus eine hohe Farbstärke, eine gute Lichtechtheit und gute Naßechtheiten, wie Wasch-, Walk-, Wasser-, Seewasser-, Überfärbe- und Schweißechtheiten, des weiteren eine gute Plissierechtheit, Bügelechtheit und Reibechtheit.

Besonders hervorzuheben sind die mit den erfindungsgemäßen Farbstoffen auf Cellulosefasermaterialien erzielbaren hohen Fixierausbeuten, die bei der Anwendung nach Druckverfahren und Klotzfärbeverfahren über 90 % betragen können. Ein weiterer Vorteil der Verbindungen (1) besteht in der leichten Auswaschbarkeit der beim Druck- oder Färbevorgang nicht fixierten Anteile, wodurch der Waschvorgang der bedruckten oder gefärbten Cellulosefasermaterialien mit geringen Waschflottenmengen und gegebenenfalls einer energiesparenden Temperaturführung während des Waschvorganges bewerkstelligt werden kann.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima ($\lambda_{max}$) im sichtbaren Bereich wurden anhand ihrer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

Beispiel 1

4,3 Teile Cyanamid werden in eine Suspension von 18,4 Teilen Cyanurchlorid in 200 Teilen Wasser und 200 Teilen Eis eingerührt. Mit konzentrierter wäßriger Natronlauge wird ein pH-Wert von 9 eingestellt und der Ansatz zwei Stunden bei 0 bis 3 °C unter Einhaltung des pH-Wertes von 9 weitergerüht, danach mittels verdünnter wäßriger Salzsäure auf einen pH-Wert von 5 gestellt und mit 29,5 Teilen 4-(β-Sulfatoethylsulfonyl)-anilin versetzt. Man rührt noch etwa vier Stunden bei einer Temperatur von etwa 5 bis 8 °C weiter, wobei der pH auf einen Wert von 1 bis 1,5 fällt. Danach gibt man Natriumcarbonat zur Einstellung eines pH-Wertes von 5,5 hinzu.

Die erhaltene Lösung wird in eine Lösung aus 18,8 Teilen 1,4-Diaminobenzol-2-sulfonsäure in 600 Teilen Wasser eingerührt. Es wird ein pH-Wert von 3,5 eingestellt, und der Reaktionsansatz wird zwei Stunden bei 80 °C unter Einhaltung eines pH-Wertes von 3,5 mittels Natriumcarbonat weitergerüht, anschließend auf eine Temperatur von 0 bis 3 °C abgekühlt und mit konzentrierter Salzsäure auf einen pH-Wert von 1,2 eingestellt. Die Diazotierung der Anilinverbindung erfolgt sodann mittels 20 Teilen einer wäßrigen 5N-Natriumnitritlösung, überschüssige salpetrige Säure wird nach der Diazotierungsreaktion in üblicher Weise mit wenig Amidosulfonsäure zerstört. Man gibt 23,9 Teile 2-Amino-8-hydroxy-6-sulfo-naphthalin hinzu und

führt die Kupplungsreaktion bei einem pH-Wert von 5 bis 5,5 und einer Temperatur von etwa 15 °C während 16 Stunden zu Ende.

Die erhaltene erfindungsgemäße Monoazoverbindung der Formel (in Form der freien Säure geschrieben)

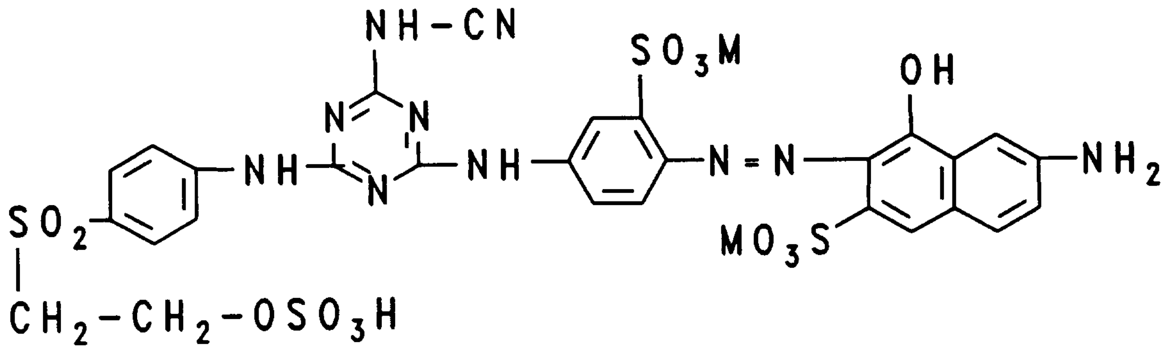

($\lambda_{max}$ = 516 nm)

wird durch Zugabe von Kaliumchlorid ausgesalzen und als Alkalimetallsalz isoliert. Sie besitzt sehr gute faserreaktive Farbstoffeigenschaften und liefert auf den in der Technik für faserreaktive Farbstoffe üblichen Färbe- und Druckverfahren auf den in der Beschreibung genannten Materialien, wie insbesondere Baumwolle, farbstarke rote Färbungen und Drucke mit guten Echtheitseigenschaften, von denen insbesondere die gute Lichtechtheit hervorgehoben werden kann.

Beispiel 2

Man setzt gemäß den Angaben des Beispieles 1 4,3 Teile Cyanamid, 18,4 Teile Cyanurchlorid und 29,5 Teile 4-($\beta$-Sulfatoethylsulfonyl)-anilin um. Zu der erhaltenen Lösung des sekundären Kondensationsproduktes gibt man 26,8 Teile 1,4-Diaminobenzol-2,5-disulfonsäure in 400 Teilen Wasser hinzu, stellt einen pH-Wert von 3,5 ein und führt die Umsetzung bei 60 °C unter Einhaltung eines pH-Wertes von 3,5 während etwa einer Stunde durch. Danach wird der Ansatz auf 0 bis 3 °C abgekühlt, mit konzentrierter wäßriger Salzsäure auf einen pH-Wert von 1,2 gestellt und die Diazotierungsreaktion durch Zugabe von 20 Teilen einer wäßrigen 5N-Natriumnitritlösung in üblicher Weise durchgeführt. Nach Zerstörung von überschüssiger salpetriger Säure gibt man 23,9 Teile 2-Amino-8-hydroxy-6-sulfo-naphthalin hinzu und führt die Kupplungsreaktion bei einem pH-Wert von 5 bis 5,5 und bei etwa 15 °C durch.

Die erfindungsgemäße Monoazoverbindung, die, in Form der freien Säure geschrieben, die Formel

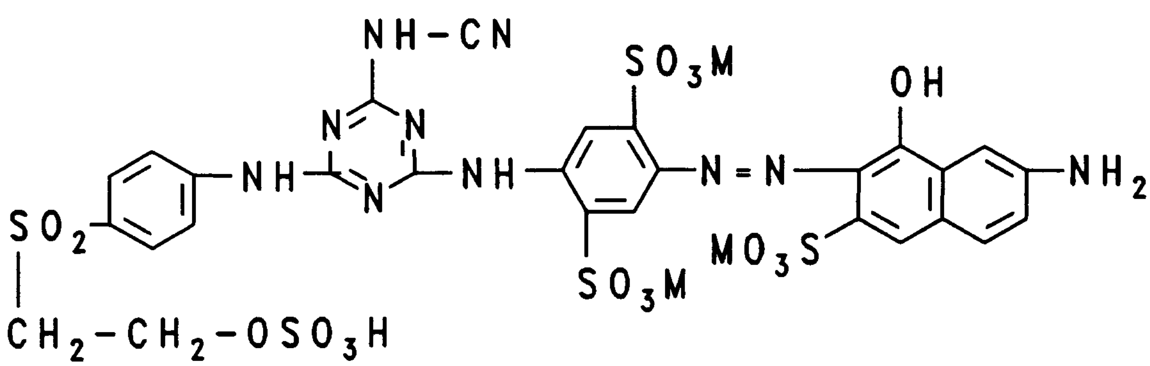

($\lambda_{max}$ = 524 nm)

besitzt, wird durch Eindampfen der Reaktionslösung isoliert. Sie besitzt sehr gute faserreaktive Farbstoffeigenschaften und liefert auf den in der Beschreibung genannten Fasermaterialien, wie insbesondere auf Baumwolle, nach den üblichen Applikations- und Fixierverfahren farbstarke rote Färbungen und Drucke mit guten Echtheitseigenschaften, von denen insbesondere die gute Lichtechtheit hervorgehoben werden kann.

Beispiel 3

Eine Suspension von 19,3 Teilen Cyanurchlorid in 100 Teilen Eis und 200 Teilen Wasser wird unter gutem Rühren mit einer Lösung mit einem pH-Wert von 5,5 von 28,1 Teilen 4-(β-Sulfatoethylsulfonyl)-anilin in 200 Teilen Wasser versetzt. Man rührt das Reaktionsgemisch noch 30 Minuten bei einem pH-Wert von 2,5 bis 3,0 und einer Temperatur von 5 bis 10 ° C weiter, erwärmt es sodann innerhalb von 30 Minuten auf 20 bis 25 ° C und rührt noch etwa eine Stunde nach. Die erhaltene Suspension wird mit einer Lösung mit einem pH-Wert von 6 von 18,8 Teilen 1,4-Diaminobenzol-2-sulfonsäure in 200 Teilen Wasser versetzt und das Gemisch etwa zwei Stunden bei einem pH-Wert von 6 und bei 20 bis 25 ° C nachgerührt. Danach wird der Ansatz auf 0 bis 3 ° C abgekühlt, mit konzentrierter wäßriger Salzsäure auf einen pH-Wert von 1,2 gestellt und die Diazotierungsreaktion in üblicher Weise durch Zugabe von 20 Teilen einer wäßrigen 5N-Natriumnitritlösungdurchgeführt. Nach Entfernen überschüssiger salpetriger Säure gibt man 23,9 Teile 2-Amino-8-hydroxy-6-sulfo-naphthalin hinzu und führt die Kupplungsreaktion bei 15 bis 20 ° C und bei einem pH-Wert von 5 bis 5,5 durch.

Die erfindungsgemäße Monoazoverbindung wird durch Eindampfen der Syntheselösung isoliert.

Alternativ kann die erfindungsgemäße Monoazoverbindung auch wie folgt hergestellt werden: 18,8 Teile 1,4-Diaminobenzol-2-sulfonsäure werden in eine Suspension von 18,4 Teilen Cyanurchlorid in 200 Teilen Eis und 200 Teilen Wasser eingerührt. Mit konzentrierter wäßriger Natronlauge wird ein pH-Wert von 8,5 eingestellt und der Ansatz noch etwa zwei Stunden bei 0 bis 3 ° C unter Einhaltung des pH-Wertes von 8,5 weitergerührt. Danach wird der Ansatz mittels verdünnter wäßriger Salzsäure auf einen pH-Wert von 5 gestellt und mit 29,5 Teilen 4-(β-Sulfatoethylsulfonyl)-anilin versetzt. Man rührt noch etwa vier Stunden bei etwa 5 bis 8 ° C weiter, wobei der pH-Wert auf 1 bis 1,5 fällt. Anschließend diazotiert man in üblicher Weise durch Zugabe von konzentrierter wäßriger Salzsäure und einer wäßrigen 5N-Natriumnitritlösung und führt die Kupplungsreaktion nach Zugabe von 24 Teilen 2-Amino-8-hydroxy-6-sulfonaphthalin gemäß den obigen Angaben durch.

Die erfindungsgemäße Monoazoverbindung besitzt, in Form der freien Säure geschrieben, die Formel

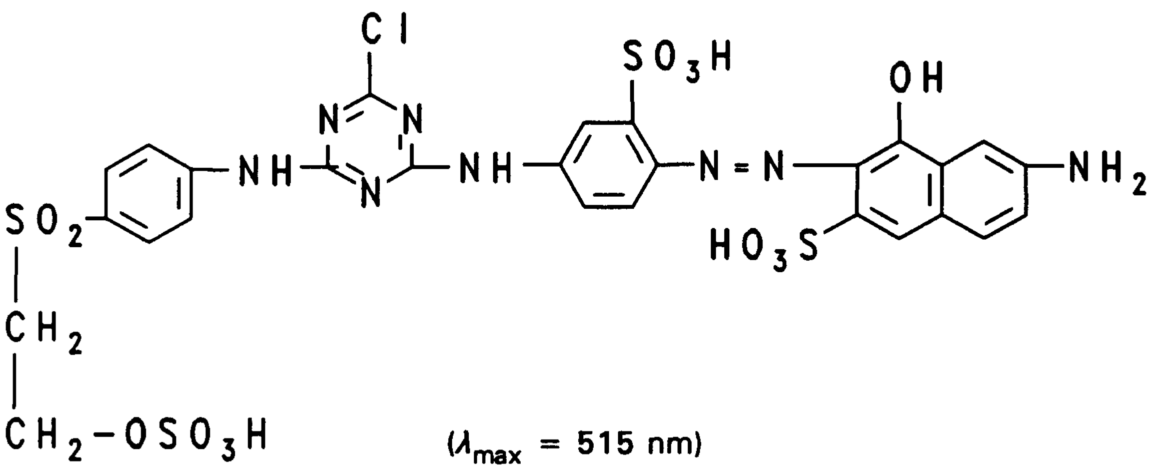

($\lambda_{max}$ = 515 nm)

und liefert nach den für faserreaktive Farbstoffe üblichen Färbe- und Druckverfahren auf den in der Beschreibung genannten Materialien, wie insbesondere Cellulosefasermaterialien, wie beispielsweise Baumwolle, farbstarke rote Färbungen und Drucke mit guten Echtheitseigenschaften, von denen insbesondere die gute Lichtechtheit hervorgehoben werden kann.

Beispiel 4

19,3 Teile Cyanurchlorid und 28,1 Teile 4-($\beta$-Sulfatoethylsulfonyl)-anilin werden gemäß den Angaben des Beispieles 3 miteinander umgesetzt. Zu der so erhaltenen Suspension rührt man eine Lösung mit einem pH-Wert von 6 von 26,8 Teilen 1 ,4-Diaminobenzol-2,5-disulfonsäure in 200 Teilen Wasser ein und führt die Umsetzung unter weiterem Rühren während etwa 3 Stunden bei einem pH-Wert von 6 und bei 20 bis 25 °C zu Ende. Der Ansatz wird anschließend auf 0 bis 3 °C abgekühlt und mit konzentrierter wäßriger Salzsäure auf einen pH-Wert von 1,2 gestellt. Die Diazotierungsreaktion erfolgt in üblicher Weise durch Einrühren von 20 Teilen einer wäßrigen 5N-Natriumnitritlösung. Nach Zerstören überschüssiger salpetriger Säure gibt man 23,9 Teile 2-Amino-8-hydroxy-6-sulfo-naphthalin hinzu und führt die Kupplungsreaktion bei etwa 15 bis 20 °C und einem pH-Wert von 5 bis 5,5 durch.

Alternativ läßt sich die erfindungsgemäße Monoazoverbindung auch herstellen, indem man 26,8 Teile 1,4-Diaminobenzol-2,5-sulfonsäure in eine Suspension von 18,4 Teilen Cyanurchlorid in 200 Teilen Eis und 200 Teilen Wasser einrührt und mit konzentrierter wäßriger Natronlauge einen pH-Wert von 8,5 einstellt und unter weiterem Rühren für etwa zwei Stunden bei 0 bis 30 °C hält. Anschließend gibt man verdünnte wäßrige Salzsäure bis zu einem pH-Wert von 5 und danach mit 29,5 Teilen 4-($\beta$-Sulfatoethylsulfonyl)-anilin hinzu. Man rührt noch etwa vier Stunden bei etwa 5 bis 8 °C weiter, wobei der pH auf einen Wert von 1 bis 1,5 fällt. Anschließend diazotiert man in üblicher Weise durch Zugabe von konzentrierter wäßriger Salzsäure und einer wäßrigen 5N-Natriumnitritlösung und führt die Kupplungsreaktion nach Zugabe von 24 Teilen 2-Amino-8-hydroxy-6-sulfo-naphthalin gemäß den obigen Angaben durch.

Man isoliert die erfindungsgemäße Monoazoverbindung in üblicher Weise, beispielsweise durch Eindampfen der Syntheselösung oder durch Aussalzen mit Natriumchlorid oder Kaliumchlorid. Sie besitzt, in Form der freien Säure geschrieben, die Formel

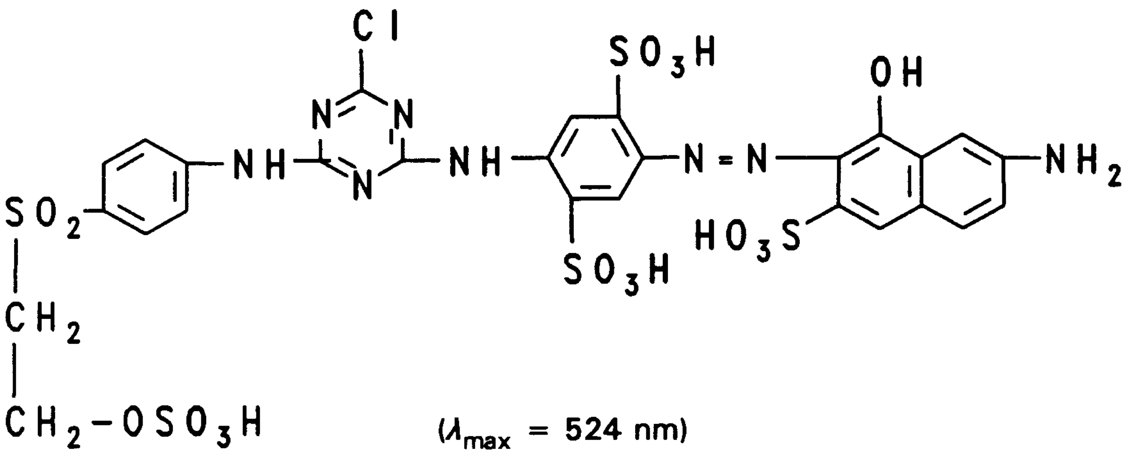

($\lambda_{max}$ = 524 nm)

und liefert nach den für faserreaktive Farbstoffe üblichen Anwendungsverfahren beispielsweise auf Baumwolle farbstarke rote Färbungen und Drucke mit guten Echtheitseigenschaften, von denen insbesondere die gute Lichtechtheit hervorgehoben werden kann.

Beispiel 5

Man versetzt unter gutem Rühren eine Lösung mit einem pH-Wert von 4,5 von 28,1 Teilen 3-($\beta$-Sulfatoethylsulfonyl)-anilin in 400 Teilen Wasser bei 0 °C mit 18,3 Teilen Cyanurfluorid, rührt den Ansatz noch etwa 15 Minuten bei einem pH-Wert von 4,5 nach, gibt 18,8 Teile 1,4-Diaminobenzol-4-sulfonsäure hinzu, stellt den pH auf einen Wert von 6,5, erwärmt den Ansatz auf 20 bis 25 °C, rührt noch etwa vier Stunden unter Einhaltung des pH-Wertes von etwa 6,5 weiter, kühlt den Ansatz sodann auf 0 °C ab und gibt 20 Teile einer wäßrigen 5N-Natriumnitritlösung hinzu. Zur Diazotierung des erhaltenen Kondensationsproduktes aus 3-($\beta$-Sulfatoethylsulfonyl)-anilin, Cyanurfluorid und 1,4-Diaminobenzol-2-sulfonsäure gibt man zu dem Reaktionsansatz unter gutem Rühren schnell 30 Teile konzentrierte wäßrige Salzsäure und rührt noch etwa eine Stunde nach. Nach Entfernen überschüssiger salpetriger Säure gibt man 23,9 Teile 2-Amino-8-hydroxy-6-sulfo-naphthalin hinzu und führt die Kupplungsreaktion bei einer Temperatur von 15 bis 20 °C

und einem pH-Wert von 5 bis 5,5 zu Ende.

Die erfindungsgemäße Monoazoverbindung besitzt, in Form der freien Säure geschrieben, die Formel

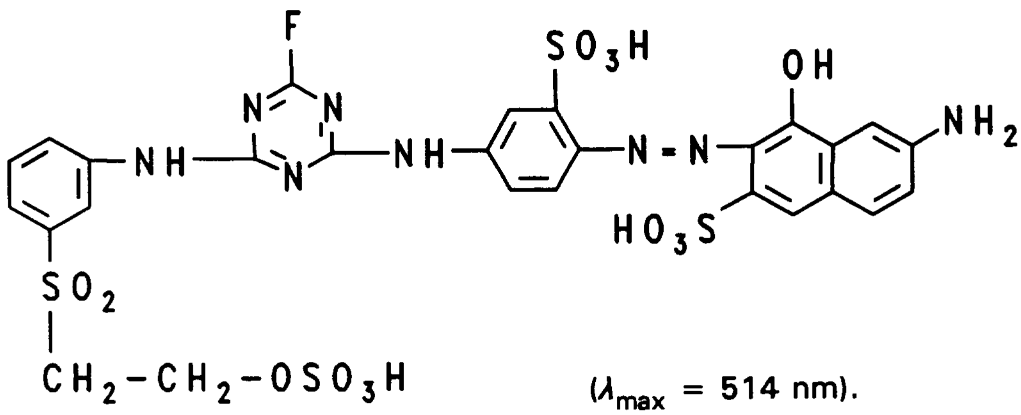

($\lambda_{max}$ = 514 nm).

Sie wird als Alkalimetallsalz durch Aussalzen mit Kaliumchlorid aus der Syntheselösung ausgefällt und in üblicher Weise isoliert. Sie besitzt sehr gute faserreaktive Farbstoffeigenschaften und färbt beispielsweise Cellulosefasern, wie Baumwolle, nach den für faserreaktive Farbstoffe üblichen Färbe- und Druckverfahren in farbstarken roten Tönen mit guten Echtheitseigenschaften, von denen insbesondere die gute Lichtechtheit hervorgehoben werden kann.

Beispiele 6 bis 56

In den nachfolgenden Tabellenbeispielen werden weitere erfindungsgemäße Monoazoverbindungen entsprechend der allgemeinen Formel (A)

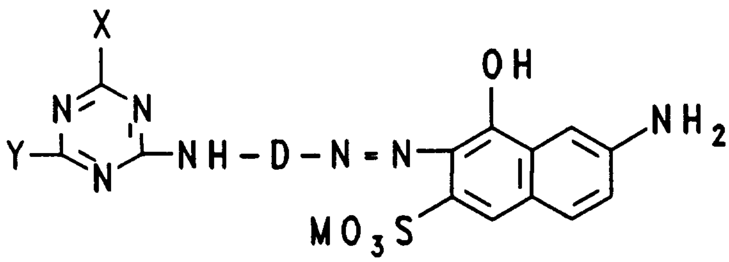

(A)

(in welcher M für Wasserstoff oder ein Alkalimetall steht) an Hand ihrer Komponenten beschrieben. Sie lassen sich in erfindungsgemäßer Weise aus den aus der allgemeinen Formel (A) ersichtlichen Ausgangsverbindungen (der Diaminobenzolsulfonsäure entsprechend der allgemeinen Formel $H_2N$-D-$NH_2$ , Cyanurfluorid oder Cyanurchlorid, den Verbindungen der allgemeinen Formel H-O-$R^A$ und $H_2N$-$R^B$ sowie H-Y und der Kupplungskomponente 2-Amino-8-hydroxy-6-sulfo-naphthalin) herstellen. Sie besitzen sehr gute faserreaktive Farbstoffeigenschaften und färben die in der Beschreibung genannten Materialien, wie insbesondere Cellulosefasermaterialien, in dem in dem jeweiligen Tabellenbeispiel (hier für Baumwolle angegebenen Farbton) in hoher Farbstärke und guten Echtheiten.

| Bsp. | Azoverbindung der Formel (A)<br>Rest Y | Rest X | Rest D | Farbton |
|---|---|---|---|---|
| 6 | 3-(ß-Sulfatoethylsulfonyl)-phenylamino | Cyanoamino | 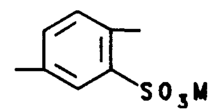 | rot (518) |
| 7 | 2-Methoxy-5-(ß-sulfatoethyl-sulfonyl)-phenylamino | dito | dito | rot (515) |
| 8 | 4-Vinylsulfonyl-phenylamino | dito | dito | rot (517) |
| 9 | 3-(ß-Sulfatoethylsulfonyl)-phenylamino | dito | 2,5-Disulfo-phen-1,4-ylen | rot (525) |
| 10 | 2-Methoxy-5-(ß-sulfatoethyl-sulfonyl)-phenylamino | dito | dito | rot (523) |
| 11 | 4-Vinylsulfonyl-phenylamino | dito | dito | rot (524) |
| 12 | 4-(ß-Sulfatoethylsulfonyl)-phenylamino | Fluor | 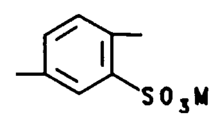 | rot (516) |
| 13 | 2-Methoxy-5-(ß-sulfatoethyl-sulfonyl)-phenylamino | Fluor | dito | rot (515) |

| Bsp. | Azoverbindung der Formel (A) | | | Farbton |
|---|---|---|---|---|
| | Rest Y | Rest X | Rest D | |
| 14 | 4-Vinylsulfonyl-phenylamino | Fluor | dito | rot (516) |
| 15 | γ-(ß'-Sulfatoethylsulfonyl)-propylamino | Fluor | dito | rot (514) |
| 16 | N-Phenyl-N-[ß-(ß'-sulfatoethylsulfonyl)-ethyl]-amino | Fluor | dito | rot (513) |
| 17 | N-Phenyl-N-[γ-(ß'-sulfatoethylsulfonyl)-propyl]-amino | Fluor | dito | rot (514) |
| 18 | γ-(ß'-Chlorethylsulfonyl)-propylamino | Fluor | dito | rot (515) |
| 19 | γ-Vinylsulfonyl-propylamino | Fluor | dito | rot (514) |
| 20 | Bis-(ß-vinylsulfonyl-ethyl)-amino | Fluor | dito | rot (516) |
| 21 | Bis-[ß-(ß'-chlorethylsulfonyl)-ethyl]-amino | Fluor | dito | rot (517) |
| 22 | Bis-[γ-(ß'-chlorethylsulfonyl)-propyl]-amino | Fluor | dito | rot (515) |
| 23 | 4-(ß-Sulfatoethylsulfonyl)-phenylamino | Fluor | 2,5-Disulfo-phen-1,4-ylen | rot (523) |
| 24 | 4-Vinylsulfonyl-phenylamino | Fluor | dito | rot (522) |

| Bsp. | Azoverbindung der Formel (A) Rest Y | Rest X | Rest D | Farbton |
|---|---|---|---|---|
| 25 | 3-(ß-Sulfatoethylsulfonyl)-vinylamino | Fluor | dito | rot (524) |
| 26 | 2-Methoxy-5-(ß-sulfatoethyl-sulfonyl)-phenylamino | Fluor | dito | rot (521) |
| 27 | γ-(ß'-Sulfatoethylsulfonyl)-propylamino | Fluor | dito | rot (522) |
| 28 | γ-(ß'-Chlorethylsulfonyl)-propylamino | Fluor | dito | rot (523) |
| 29 | γ-Vinylsulfonyl-propylamino | Fluor | dito | rot (521) |
| 30 | N-Phenyl-N-[ß-(ß'-sulfatoethylsulfonyl)-ethyl]-amino | Fluor | dito | rot (521) |
| 31 | N-Phenyl-N-[γ-(ß'-sulfatoethylsulfonyl)-propyl]-amino | Fluor | dito | rot (522) |
| 32 | Bis-(ß-vinylsulfonyl-ethyl)-amino | Fluor | dito | rot (524) |
| 33 | Bis-[ß-(ß'-chlorethylsulfonyl)-ethyl]-amino | Fluor | dito | rot (525) |
| 34 | Bis-[γ,(ß'-chlorethylsulfonyl)-propyl]-amino | Fluor | dito | rot (523) |

| Bsp. | Azoverbindung der Formel (A) Rest Y | Rest X | Rest D | Farbton |
|---|---|---|---|---|
| 35 | 4-Vinylsulfonyl-phenylamino | Chlor | 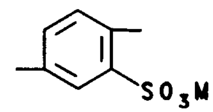 | rot (514) |
| 36 | 3-(ß-Sulfatoethylsulfonyl)-phenylamino | Chlor | dito | rot (513) |
| 37 | 2-Methoxy-5-(ß-sulfatoethylsulfonyl)-phenylamino | Chlor | dito | rot (513) |
| 38 | γ-(ß'-Sulfatoethylsulfonyl)-propylamino | Chlor | dito | rot (512) |
| 39 | γ-(ß'-Chlorethylsulfonyl)-propylamino | Chlor | dito | rot (514) |
| 40 | γ-Vinylsulfonyl-propylamino | Chlor | dito | rot (513) |
| 41 | N-Phenyl-N-[ß-(ß'-sulfatoethylsulfonyl)-ethyl]-amino | Chlor | dito | rot (512) |
| 42 | N-Phenyl-N-[γ-(ß'-sulfatoethylsulfonyl)-propyl]-amino | Chlor | dito | rot (514) |
| 43 | Bis-(ß-vinylsulfonyl)-ethyl-amino | Chlor | dito | rot (515) |
| 44 | Bis-[ß-(ß'-chlorethylsulfonyl)-ethyl]-amino | Chlor | dito | rot (516) |

| | Azoverbindung der Formel (A) | | | |
|---|---|---|---|---|
| Bsp. | Rest Y | Rest X | Rest D | Farbton |
| 45 | Bis-[γ-(ß'-chlorethylsulfonyl)-propyl]-amino | Chlor | dito | rot (515) |
| 46 | 4-Vinylsulfonyl-phenylamino | Chlor | 2,5-Disulfo-phen-1,4-ylen | rot (522) |
| 47 | 3-(ß-Sulfatoethylsulfonyl)-phenylamino | Chlor | dito | rot (523) |
| 48 | 2-Methoxy-5-(ß-sulfatoethylsulfonyl)-phenylamino | Chlor | dito | rot (521) |
| 49 | γ-(ß'-Sulfatoethylsulfonyl)-propylamino | Chlor | dito | rot (522) |
| 50 | γ-(ß'-Chlorethylsulfonyl)-propylamino | Chlor | dito | rot (521) |
| 51 | γ-Vinylsulfonyl-propylamino | Chlor | dito | rot (520) |
| 52 | N-Phenyl-N-[ß-(ß'-sulfatoethylsulfonyl)-ethyl]-amino | Chlor | dito | rot (521) |
| 53 | N-Phenyl-N-[γ-(ß'-sulfatoethylsulfonyl)-propyl]-amino | Chlor | dito | rot (522) |
| 54 | Bis-(ß-vinylsulfonyl-ethyl)-amino | Chlor | dito | rot (524) |
| 55 | Bis-[ß-(ß'-chlorethylsulfonyl)-ethyl]-amino | Chlor | dito | rot (525) |

| Bsp. | Azoverbindung der Formel (A) | | | Farbton |
|---|---|---|---|---|
| | Rest Y | Rest X | Rest D | |
| 56 | Bis-[γ-(ß'-chlorethylsulfonyl)-propyl]-amino | Chlor | dito | rot (524) |

## Patentansprüche

**1.** Eine Azoverbindung entsprechend der allgemeinen Formel (1)

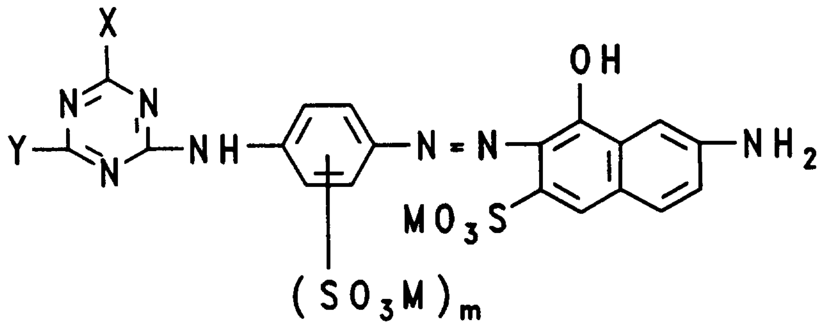

(1)

in welcher bedeuten:

M ist Wasserstoff oder ein Alkalimetall;

m ist die Zahl 1 oder 2;

X ist Fluor, Chlor oder eine Gruppe der allgemeinen Formel (2a) oder (2b)

$R^A$ - O - (2a) $R^B$ - NH - (2b)

in welchen

$R^A$ Alkyl von 1 bis 10 C-Atomen oder Cycloalkyl von 5 bis 8 C-Atomen, das noch durch 1 oder 2 Methylgruppen substituiert sein kann, oder Alkyl von 2 bis 8 C-Atomen bedeutet, das durch eine oder zwei Heterogruppen unterbrochen ist, oder Benzyl oder Sulfoalkyl von 1 bis 4 C-Atomen ist und

$R^B$ Wasserstoff, Alkyl von 1 bis 10 C-Atomen oder Cycloalkyl von 5 bis 8 C-Atomen ist, das noch durch 1 oder 2 Methylgruppen substituiert sein kann, oder Alkyl von 2 bis 8 C-Atomen bedeutet, das durch eine oder zwei Heterogruppen unterbrochen ist, oder Benzyl, Sulfoalkyl von 1 bis 4 C-Atomen oder Cyano ist;

Y ist Fluor, Chlor oder eine Gruppe der allgemeinen Formel (3a)

$R^o$ - NH - (3a)

in welcher

$R^o$ eine Gruppe der allgemeinen Formel (4a), (4b) oder (4c) Z - $SO_2$ - alk - (4a)

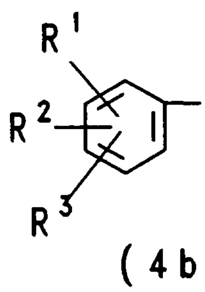

(4b)

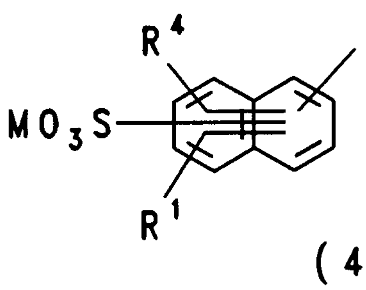

(4c)

ist, in welchen

M die obengenannte Bedeutung besitzt,

Z für Vinyl steht oder Ethyl ist, das in β-Stellung durch einen Substituenten substituiert ist, der durch Alkali unter Bildung der Vinylgruppe eliminierbar ist,

alk Alkylen von 2 bis 4 C-Atomen ist,

$R^1$ Wasserstoff, Carboxy, Sulfo oder eine Gruppe der allgemeinen Formel -$SO_2$-Z ist, worin Z die obengenannte Bedeutung besitzt,

$R^2$ Wasserstoff, Alkyl von 1 bis 4 C-Atomen, Alkoxy von 1 bis 4 C-Atomen, Chlor, Brom, Carboxy, Sulfo oder Nitro ist;

$R^3$ Wasserstoff, Alkyl von 1 bis 4 C-Atomen, Alkoxy von 1 bis 4 C-Atomen, Chlor oder Brom ist und

$R^4$ Wasserstoff, Sulfo oder Carboxy ist, oder

Y ist eine Gruppe der allgemeinen Formel (3b)

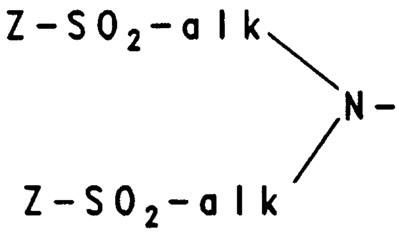

(3b)

in welcher Z und alk die obengenannte Bedeutung haben, oder

Y ist eine Gruppe der allgemeinen Formel (3c)

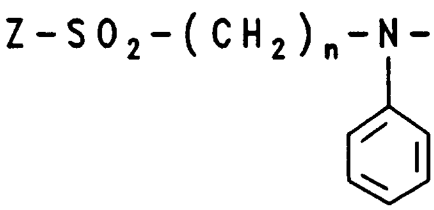

(3c)

in welcher

n für die Zahl 1 bis 4 steht und

Z Vinyl ist oder Ethyl ist, das in β-Stellung durch einen Substituenten substituiert ist, der durch Alkali unter Bildung der Vinylgruppe eliminiert wird.

**2.** Verbindung nach Anspruch 1, dadurch gekennzeichnet, daß X Chlor oder Fluor ist.

**3.** Verbindung nach Anspruch 1, dadurch gekennzeichnet, daß X Cyanoamino ist.

**4.** Verbindung nach Anspruch 1 der Formel

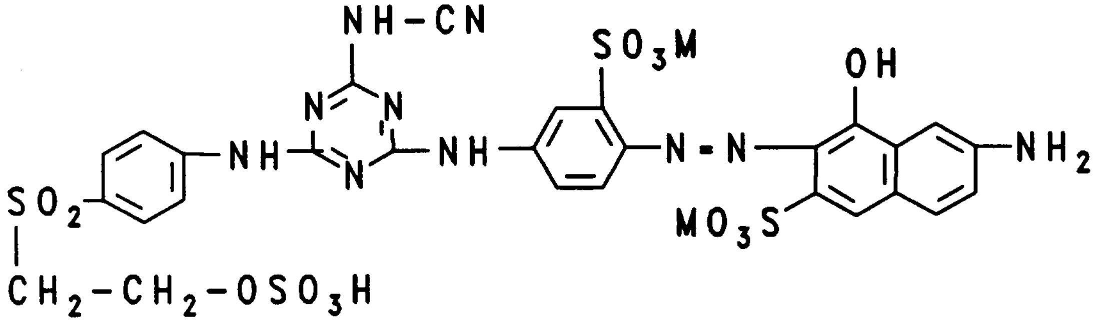

in welcher M Wasserstoff oder ein Alkalimetall ist.

**5.** Verbindung nach Anspruch 1 der Formel

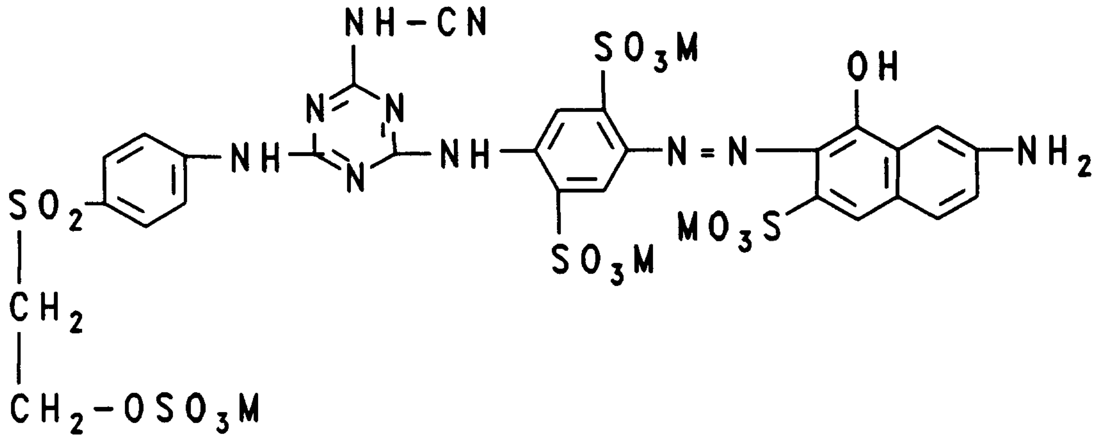

in welcher M Wasserstoff oder ein Alkalimetall ist.

6. Verfahren zur Herstellung einer Monoazoverbindung der allgemeinen Formel (1) von Anspruch 1, dadurch gekennzeichnet, daß man eine Verbindung der allgemeinen Formel (5)

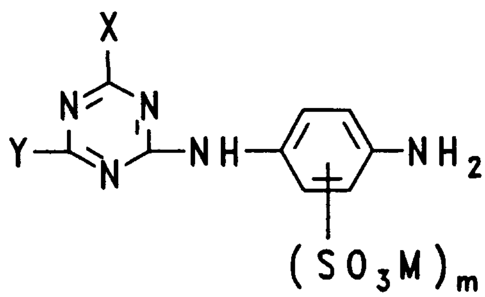

(5)

in welcher X, Y, M und m die in Anspruch 1 genannten Bedeutungen haben, diazotiert und mit einer Verbindung der allgemeinen Formel (6)

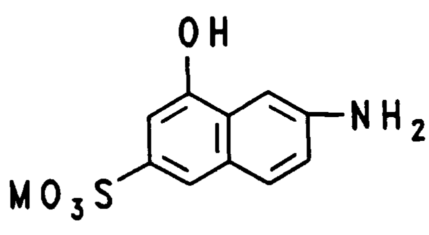

(6)

in welcher M die in Anspruch 1 genannte Bedeutung besitzt, kuppelt.

7. Verwendung einer Monoazoverbindung von mindestens einem der Ansprüche 1 bis 5 oder einer nach Anspruch 6 hergestellten Monoazoverbindung zum Färben von hydroxy- und/oder carbonamidgruppenhaltigem Material, insbesondere Fasermaterial.

8. Verfahren zum Färben von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder durch beide Maßnahmen fixiert, dadurch gekennzeichnet, daß man als Farbstoff eine Monoazoverbindung von mindestens einem der Ansprüche 1 bis 5 oder einer nach Anspruch 6

hergestellten Monoazoverbindung in das Verfahren einsetzt.

**9.** Verwendung einer Monoazoverbindung nach Anspruch 7 in Kombinationsfärbungen.

**10.** Verfahren nach Anspruch 8, dadurch gekennzeichnet, daß das Färbeverfahren eine Kombinationsfärbung ist.

Europäisches Patentamt

**EUROPÄISCHER RECHERCHENBERICHT**

Nummer der Anmeldung: EP 94111576.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl6) |
|---|---|---|---|
| A | EP - A - 0 265 928 (SUMITOMO CHEMICAL) * Anspruch 1; Seite 6, Zeilen 31-38 * -- | 1,7,8 | C 09 B 62/085 |
| A | US - A - 4 837 310 (TOSHIHIKO MORIMITSU et al.) * Ansprüche 1-4 * -- | 1 | |
| A | US - A - 4 667 022 (TOSHIO NAKAMATSU et al.) * Zusammenfassung * -- | 1,7,8 | |
| A | DE - A - 2 924 889 (CIBA-GEIGY) * Ansprüche 1,9,21-23 * -- | 1, 6-8 | |
| A | GB - A - 923 887 (IMPERIAL CHEMICAL) * Ansprüche 1,9,12 * ---- | 1, 6-8 | |

RECHERCHIERTE SACHGEBIETE (Int Cl6)

C 09 B 62/00

Der vorliegende Recherchenbericht wurde für alle Patentansprüche erstellt.

| Recherchenort | Abschlußdatum der Recherche | Prüfer |
|---|---|---|
| WIEN | 04-10-1994 | REIF |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 62